# EUROPÄISCHE PATENTANMELDUNG

(11) **EP 3 367 315 A1**
(43) Veröffentlichungstag der Anmeldung: **29.08.2018**
(21) Anmeldenummer: 17158275.2
(22) Anmeldetag: 28.02.2017
(51) Int. Cl.: G06Q 10/08, G06Q 50/04, G06Q 50/28, B60P 1/64, G05D 1/10, B41M 5/00, B41M 5/26, B64C 39/02

(54) **PRODUKTIONSSYSTEM UND VERFAHREN ZUM BEDRUCKEN UND TRANSPORTIEREN VON WERKSTÜCKEN MITTELS EINES UNBEMANNTEN FLUGGERÄTS**

(71) Anmelder: TRUMPF Werkzeugmaschinen GmbH + Co. KG, 71254 Ditzingen (DE)
(72) Erfinder: BAUER, Klaus, 71254 Ditzingen (DE); WAHL, Eberhard, 73235 Weilheim an der Teck (DE); SCHLEGEL, Rainer, 72469 Meßstetten (DE); HOEFERT, Christian, 72131 Ofterdingen (DE); OECHSLE, Stephan, 70771 Echterdingen (DE); ROEDER, Dr. Holger, 71229 Leonberg (DE); WETZEL, Matthias, 70839 Gerlingen (DE)
(74) Vertreter: Kohler Schmid Möbus Patentanwälte

(57) **Zusammenfassung**

Ein Produktionssystem (1) mit mindestens einer Werkzeugmaschine (3, 6a, 6b) zum Bearbeiten von Werkstücken (4) weist erfindungsgemäß mindestens ein die Werkzeugmaschine (3, 6a, 6b) anfliegendes Fluggerät (10, 10'), welches eine Werkstück-Applikationseinheit (13, 14) aufweist, wobei Applikationsdaten für den Einsatz der Applikationseinheit (13, 14) an einem Werkstück (4) Logistikdaten für das bearbeitete oder noch zu bearbeitende Werkstück (4) umfassen.

## Beschreibung

Die Erfindung betrifft ein Produktionssystem mit mindestens einer Werkzeugmaschine zum Bearbeiten von Werkstücken, sowie auch ein Verfahren zum Applizieren von Applikationsdaten, insbesondere Logistikdaten, an ein zu transportierendes Werkstück.

Derartige Produktionssysteme mit Werkzeugmaschinen in Form von z.B. Stanz-, Biege- oder Lasermaschinen sind hinreichend bekannt. Für die Be- und Entladung von Werkzeugmaschinen werden stationäre Automatisierungskomponenten mit Lageranbindung und für die Teilevereinzelung Industrieroboter eingesetzt.

Der Transport zwischen den einzelnen Fertigungsstationen eines Produktionssystems erfolgt meist über Transportbänder oder Transportwägen, wodurch die Transportwege fest vorgegeben sind und auf Veränderungen nicht flexibel reagiert werden kann.

Logistikdaten (Werkstücknummern, Los-Nummern, Transportdaten, etc.) werden auf die Werkstücke entweder in Form von Etiketten händisch oder automatisiert aufgebracht oder aber aufgedruckt. Kunden fordern vermehrt eine Markierung von Blechteilen zur eindeutigen Identifikation für die Fertigungssteuerung. Dabei wird neben der existierenden permanenten Markierung mit Dot Matrix auch zwingend eine temporäre gefordert. Eine solche Markierung würde eine zusätzliche XY-Positionseinheit benötigen, die jedoch spezifisch pro Layout sein muss und neben dem hohen Grundinvest einen hohen mechanischen Adaptionsaufwand pro Installation erfordert. Ansätze ohne zusätzliche XY-Positionseinheit bedienen sich vorhandener Achsen, was den Nachteil des Ressourcenkonfliktes bringt und zu reduziertem Durchsatz führt.

Der vorliegenden Erfindung liegt daher die Aufgabe zugrunde, ein Produktionssystem und ein Verfahren anzugeben, bei denen Logistikdaten, wie z.B. Druck- oder Transportdaten, einfach und mit hoher Flexibilität an Werkstücke appliziert werden können.

Diese Aufgabe wird bei dem eingangs genannten Produktionssystem erfindungsgemäß durch mindestens ein die Werkzeugmaschine anfliegendes Fluggerät gelöst, welches eine Werkstück-Applikationseinheit aufweist, wobei Applikationsdaten für den Einsatz der Applikationseinheit an einem Werkstück Logistikdaten für das bearbeitete oder noch zu bearbeitende Werkstück umfassen.

Das erfindungsgemäße Produktionssystem ermöglicht hohe Flexibilität, massive Parallelisierbarkeit des Transports, hohes Automatisierungspotential, Unabhängigkeit von räumlichen Gegebenheiten, mannlosen Betrieb, hohe Ausfallsicherheit und Robustheit durch redundante Fluggerätkapazitäten, kostengünstigen Betrieb durch Verwendung von Standardkomponenten, einfache Erweiterbarkeit durch Hinzufügen zusätzlicher Fluggeräte.

Das bzw. die Fluggeräte sind beispielsweise kommerziell verfügbare, nichtpersonentragende Helikopter (Drohnen, Flugroboter), wie z.B. Quadrokopter, mit programmierbarer Steuerung und verfügen über wiederaufladbare Energiequellen, die an hierzu vorgesehenen Energieversorgungspositionen aufgeladen werden können, z.B. per Induktion oder alternativ über Photovoltaik-Aufladung mit Laser (z.B. Diodenlaser). Im einfachsten Fall wird eine handelsübliche Drohne mit einer separaten Fernsteuerung eingesetzt. Es gibt solche Drohnen heute bereits mit geregelter Positionserhaltung, wobei als Basis das GPS-Signal dient. Durch das Fehlen von Wind in der Maschinenhalle können unter Nutzung der heute bestehenden Drohnenregelungslösungen gute Genauigkeiten zu geringen Kosten umgesetzt werden.

Bevorzugt umfasst die Werkzeugmaschine auch eine daran angeschlossene Beladungseinrichtung, insbesondere mit einem Werkstück-Regallager, zum automatisierten Beladen mit zu bearbeitenden Werkstücken (z.B. Rohblechen) und/oder eine daran geschlossene Entladungseinrichtung zum automatisierten Entladen der bearbeiteten Werkstücke. Beispielsweise gibt es an Werkzeugmaschinen (2D-Stanz-, Laser- oder Kombimaschinen) eine mit der Werkzeugmaschine gekoppelte Automatisierung (Saugerrahmen), die Rohbleche von einer Palette neben der Werkzeugmaschine abholt und in die Werkzeugmaschine lädt. Das Fluggerät kann das Werkstück also auch bereits auf dem Rohblech in der Beladungseinrichtung, also noch bevor es bearbeitet worden ist, oder in der Entladungseinrichtung, also nachdem es bearbeitet und entladen worden ist, anfliegen. Voraussetzung für das Anfliegen des Werkstücks bereits auf dem Rohblech ist allerdings, dass die Position des zu bearbeitenden Werkstücks bekannt ist oder erfasst werden kann und dass bereits festgelegt ist, welches Werkstückteil wo aus diesem Rohblech herausgearbeitet wird.

Die Palette mit einem Rohblech kann auch selbst noch an ein Hochregallager der Werkzeugmaschine angeschlossen sein, das die Palette an der Werkzeugmaschine gegen andere Paletten (bspw. mit Blechen aus anderem Ausgangsmaterial) automatisiert austauschen kann. Auch dieses Rohblech im Hochregallager kann bereits vom Fluggerät angeflogen werden, wobei sichergestellt sein muss, dass die Automatisierung bzw. ein Palettenwechsler nicht mit dem Fluggerät kollidieren.

Vorzugsweise weist das Produktionssystem ein Flugkontrollzentrum auf, von dem aus die Flugbewegungen des mindestens einen Fluggeräts kontrollierbar sind. Das Flugkontrollzentrum steuert und kontrolliert die Fluggeräte autonom, wobei die Kommunikation mit den Fluggeräten drahtlos erfolgt. Das Flugkontrollzentrum verwaltet die Fluggeräte und überwacht deren Position, Energiezustand und Auftragsstatus. Die Priorität der anstehenden Flugaufträge wird durch einen Algorithmus unter Berücksichtigung der aktuellen Position der zur Verfügung stehenden Fluggeräte zur optimalen Zuweisung von Flugaufträgen an Fluggeräte genutzt. Das Flugkontrollzentrum berechnet und verwaltet Flugkorridore der einzelnen Fluggeräte (Makrosteuerung). Innerhalb eines zugewiesenen Flugkorridors kann ein Fluggerät autonom agieren, um beispielsweise Kollisionen zu vermeiden (Mikrosteuerung). Während des Flugs innerhalb des vom Flugkontrollzentrum zugewiesenen Flugkorridors erfasst das Fluggerät mittels geeigneter Sensorik seine Umgebung, insbesondere potentielle Hindernisse. Werden solche erkannt, leitet das Fluggerät autonom Schritte zur Kollisionsvermeidung ein. Zur Positionierung kann ein Indoor-GPS zum Einsatz kommen, wobei Störkonturen im Feld mittels einer Softwaredefinition des Flugraumes einfach berücksichtigt werden können.

Bevorzugt steht das Flugkontrollzentrum in Kommunikationsverbindung, z.B. in WLAN-Verbindung, mit der mindestens einen Werkzeugmaschine, insbesondere um Kollisionen des Fluggeräts mit bewegbaren Maschinenteilen der Werkzeugmaschine zu verhindern oder um die an der Werkzeugmaschine anzufliegende Zielposition an das Flugkontrollzentrum zu übertragen. Die Flugaufträge werden vom Flugkontrollzentrum entsprechend an die Fluggeräte verteilt. Die Erfassung der einzelnen Fluggeräte durch das Flugkontrollzentrum kann über ein beliebiges (Indoor-)Navigationssystem, bspw. optisch über Infrarotkameras und -reflektoren oder alternativ über WLAN-Ortung oder andere drahtlose Ortung erfolgen.

Besonders bevorzugt steht das Flugkontrollzentrum in Kommunikationsverbindung, z.B. in WLAN-Verbindung, mit einer Fertigungs- oder Produktionsablaufsteuerung, die den Produktionsablauf der Werkstücke an der mindestens einen Werkzeugmaschine steuert. Die Produktionsablaufsteuerung legt beispielsweise fest, wann welches Werkstück von dem Fluggerät angeflogen werden soll und welche Logistikdaten appliziert werden sollen, während vom Flugkontrollzentrum die Flugdaten für das kollisionsfreie Anfliegen des spezifischen Werkstücks an die beteiligten Fluggeräte übermittelt werden. Die Systemkomponenten kommunizieren über bidirektionale Kommunikationskanäle. Die Kommunikation der zentralen Steuerungseinheit mit externen Produktionsplanungssystemen oder Maschinen erfolgt über herkömmliche Kommunikationswege und -protokolle.

In einer besonders bevorzugten Ausführungsform der Erfindung ist die Applikationseinheit als eine Markierungseinheit zum Markieren der Logistikdaten auf das Werkstück, insbesondere als eine Druckereinheit zum Drucken der Logistikdaten auf das Werkstück oder eine Lasermarkierungseinheit zum Lasermarkieren der Logistikdaten auf das Werkstück, ausgebildet. Als (temporäre) Druckmarkierung kann die Inkjet-Technologie zum Einsatz kommen. Diese kommt ohne Trägerelement aus und kann das Werkstück aus einem Abstand von bis zu 10 cm bedrucken. Als Fluggerät der Markierungseinheit wird beispielsweise eine umgebaute Drohne (z.B. ein Quadrokopter) verwendet, die während des Markierens auf dem Werkstück oder der Werkzeugmaschine aufsitzt oder beabstandet zum Werkstück schwebt. Bevorzugt kann das Fluggerät auch mit einem weiteren Antriebssystem ausgestattet sein, das es erlaubt, über ein flaches Werkstück (Blech) zu fahren/gleiten/rollen, was energiesparender ist, wenn mehrere Markierungen angebracht werden sollen.

Das Fluggerät mit seiner Markierungseinheit kann Ausgangsmaterialien (z.B. Rohbleche) bzw. Werkstücke, bevor sie bearbeitet werden oder nachdem sie bearbeitet worden sind, anfliegen und markieren. Bei den markierten Werkstücken kann es sich also um Ausgangs-, Zwischen- oder Endprodukte handeln.

In einer Weiterbildung dieser Ausführungsform weist das Produktionssystem mindestens eine Weiterverarbeitungsstation auf, insbesondere eine zweite Werkzeugmaschine oder eine Station zum automatisierten oder manuellen Weiterbearbeiten von bearbeiteten Werkstücken, wobei die aufgedruckten Logistikdaten Daten für einen Weitertransport von bearbeiteten Werkstücken an die mindestens eine Weiterverarbeitungsstation umfassen.

In einer weiteren besonders bevorzugten Ausführungsform der Erfindung ist die Applikationseinheit als eine Halteeinheit zum Halten von bearbeiteten Werkstücken ausgebildet. Zu transportierende Werkstücke werden von einem oder mehreren Fluggeräten an der Werkzeugmaschine aufgenommen, zur Zielstation geflogen und dort abgelegt, wodurch ein autonomes flugroboterbasiertes Transportsystem bereitgestellt ist. Die Halteeinheit kann beispielsweise als Vakuumsauger, Elektromagnet, Elektroadhäsionsgreifer oder mechanischer Greifer ausgeführt sein. Abhängig von den Werkstückeigenschaften werden ein oder mehrere Werkstücke durch ein oder mehrere Fluggeräte gemeinsam (Schwarm) transportiert. Das Transportsystem ist vorteilhafterweise eingebettet in einen industriellen Fertigungsprozess. Es kann für die Vereinzelung und den Transport von Blechteilen innerhalb der Prozesskette zwischen Bearbeitungsstationen (Werkzeugmaschinen) und/oder Lagerplätzen (Materiallager, Paletten) eingesetzt werden. Die Produktionsablaufsteuerung kann festlegen, wann von welcher Werkzeugmaschine welches Werkstück wohin gebracht werden soll, und weist den Fluggeräten die Logistikdaten in Form von Transportaufträgen unter Berücksichtigung der spezifischen Eigenschaften der Fluggeräte (Tragefähigkeit, Geschwindigkeit, Größe, Aufnahmevorrichtung usw.) zu. Die Produktionsablaufsteuerung verwaltet Transportaufträge für den Transport von Gütern von Ausgangs- zu Zielstationen. Die Transportaufträge können beispielsweise von der Produktionsablaufsteuerung oder der Werkzeugmaschine stammen. Die Transportaufträge enthalten unter anderem Informationen über die zu transportierenden Werkstücke (Geometrie, Gewicht usw.) sowie die Ausgangs- und Zielposition. Außerdem können Transportaufträge eine unterschiedliche Priorität aufweisen: Dringende Aufträge werden mit einer höheren Priorität abgearbeitet (z.B. weil Werkstücke dringend an den Kunden verschickt werden müssen), und eine Werkzeugmaschine kann die Priorität neuer und auch bestehender Entladeaufträge erhöhen, weil der Platz für neue Werkstücke benötigt wird. In diesem Fall würden mehr Fluggeräte für die Entladung dieser Maschine eingeteilt; die zur Verfügung stehende Kapazität kann damit sehr flexibel eingesetzt werden, was gegenüber aktuell verfügbaren Transportsystemen eine wesentliche Verbesserung darstellt.

Ausgangs- und Zielposition des Fluggeräts sind Bestandteil eines Transportauftrags; hierdurch ist die höchstmögliche Flexibilität bei der Sortierung von Werkstücken gewährleistet. Dadurch können z.B. jederzeit neue Lagerstellen für bestimmte Werkstücke definiert werden, die sich beliebig auf den für die Fluggeräte zugänglichen Raum aufteilen können. Aktuell verfügbare Entladesysteme weisen dagegen fest definierte Entladestellen auf. Nach Erreichen der Zielposition lädt das Fluggerät die transportierten Werkstücke ab. Bis zur Erteilung des nächsten Transportauftrags fliegt das Fluggerät zu einer vom Flugkontrollzentrum oder von der Produktionsablaufsteuerung zugewiesenen Park- oder Ladeposition. Treten bei einem Transportauftrag Probleme auf - z.B. weil das zu transportierende Werkstück nicht mehr an der Ausgangsposition verfügbar ist oder weil die Zielposition aktuell nicht mehr angeflogen werden kann - meldet das Fluggerät dies der zentralen Steuerung und kann daraufhin einen geänderten Transportauftrag erhalten.

In einer Weiterbildung dieser Ausführungsform weist das Produktionssystem mindestens eine Weiterverarbeitungsstation auf, insbesondere eine zweite Werkzeugmaschine oder eine Station zum automatisierten oder manuellen Weiterbearbeiten von bearbeiteten Werkstücken, wobei die Logistikdaten Daten für einen Flugtransport von bearbeiteten Werkstücken von der Werkzeugmaschine an die mindestens eine Weiterverarbeitungsstation mittels des mindestens einen Fluggeräts umfassen.

Die Erfindung betrifft auch ein Verfahren zum Applizieren von Applikationsdaten, insbesondere Logistikdaten, an ein zu transportierendes Werkstück, wobei erfindungsgemäß das zu transportierende Werkstück von mindestens einem Fluggerät angeflogen wird, welches Applikationsdaten für das Werkstück aufweist, und wobei die Applikationsdaten von dem mindestens einen Fluggerät auf das Werkstück markiert werden, insbesondere gedruckt oder lasermarkiert werden, oder das Werkstück von dem mindestens einen Fluggerät entsprechend den Applikationsdaten transportiert wird.

Vorzugsweise werden die Flugbewegungen des mindestens einen Fluggeräts einerseits und die Bewegungen von anderen Fluggeräten oder von bewegbaren Maschinenteilen einer das Werkstück bearbeitenden Werkzeugmaschine andererseits derart aufeinander abgestimmt, dass das mindestens eine Fluggerät nicht mit den anderen Fluggeräten oder mit den bewegbaren Maschinenteilen kollidiert.

Die anzufliegende Zielposition an einer das Werkstück bearbeitenden Werkzeugmaschine wird von der Werkzeugmaschine oder einer Produktionsablaufsteuerung an das mindestens eine Fluggerät oder an ein Flugkontrollzentrum, von dem aus die Flugbewegungen des mindestens einen Fluggeräts kontrolliert werden, übertragen.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erfindungsgemäßes Produktionssystem mit mehreren Werkzeugmaschinen und mit Fluggeräten zum Applizieren von Logistikdaten an ein zu transportierendes Werkstück; und
- Fign. 2a, 2b: schematisch ein Fluggerät zum Bedrucken von Werkstücken (Fig. 2a) und ein Fluggerät zum Transportieren von Werkstücken (Fig. 2b).

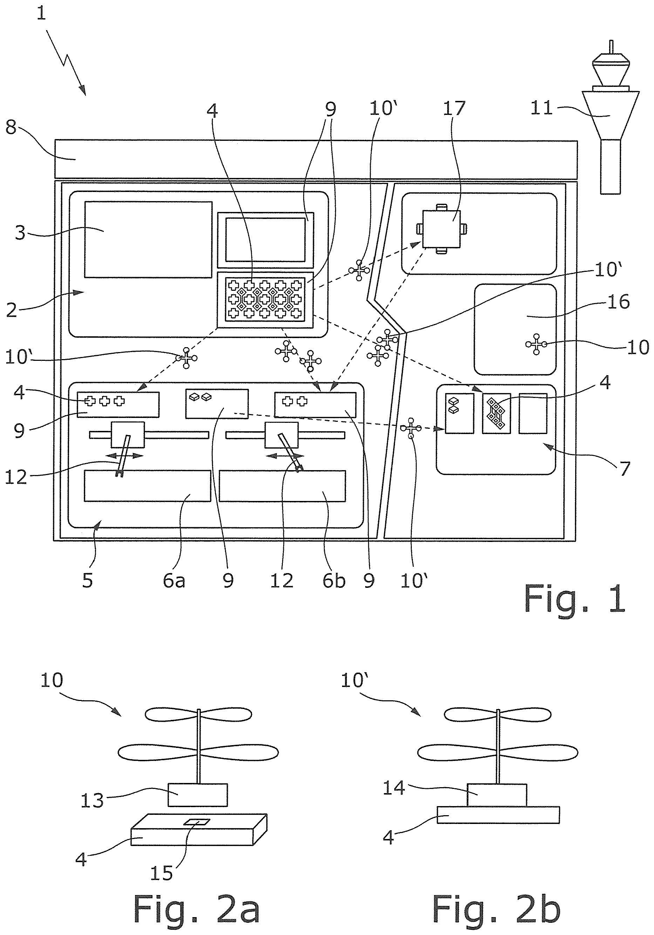

Das in **Fig. 1** gezeigten Produktionssystem **1** befindet sich in einer großflächigen Maschinenhalle und umfasst einen Lasermaschinenbereich **2** mit einer als Laserbearbeitungsmaschine (2D-Laserflachbettmaschine) ausgeführten Werkzeugmaschine **3** zum Laserbearbeiten von Werkstücken **4**, einen Biegezellenbereich **5** mit zwei als Biegemaschinen ausgeführten Werkzeugmaschinen **6a**, **6b** zum Biegen von Werkstücken 4, eine Weiterverarbeitungsstation 7 (hier beispielhaft in Form eines Versandbereiches zum manuellen oder automatisierten Kommissionieren von bearbeiteten Werkstücken 4), sowie eine zentrale Produktionsablaufsteuerung **8**, die den Produktionsablauf der Werkstücke 4 an den Werkzeugmaschinen 3, 6a, 6b steuert. Der Lasermaschinenbereich 2 und der Biegezellenbereich 5 weisen jeweils Werkstückablagen **9** für bearbeitete Werkstücke 4 auf.

Das Produktionssystem 1 umfasst weiterhin mehrere die Werkzeugmaschinen 3, 6a, 6b anfliegende Fluggeräte (Drohnen) **10**, **10'** und ein Flugkontrollzentrum **11**, von dem aus die Flugbewegungen der Fluggeräte 10, 10' einzeln und zueinander kontrolliert werden. Als Fluggeräte 10, 10' können kommerziell verfügbare, nichtpersonentragende Helikopter, wie z.B. Quadrokopter, eingesetzt werden. Das Flugkontrollzentrum 11 berechnet und verwaltet Flugkorridore der einzelnen Fluggeräte 10, 10' (Makrosteuerung). Innerhalb eines zugewiesenen Flugkorridors kann ein Fluggerät 10, 10' autonom agieren, um beispielsweise Kollisionen zu vermeiden (Mikrosteuerung). Das Flugkontrollzentrum 11 steht weiterhin in Kommunikationsverbindung sowohl mit den Werkzeugmaschinen 3, 6a, 6b, um Kollisionen des Fluggeräts 10, 10' mit bewegbaren Maschinenteilen **12** der Werkzeugmaschinen 3, 6a, 6b zu verhindern oder um die an der Werkzeugmaschine 3, 6a, 6b anzufliegende Zielposition von der Werkzeugmaschine an das Flugkontrollzentrum 11 zu übertragen, als auch mit der Produktionsablaufsteuerung 8, um den Einsatz eines Fluggeräts 10, 10' entsprechend dem Produktionsablauf zu veranlassen. Für die Kommunikationsverbindung können bekannte Wi-Fi Standards (z.B. WLAN, Bluetooth, ...) zum Einsatz kommen. Um die Werkzeugmaschinen 3, 6a, 6b ist jeweils ein Sicherheitsbereich festgelegt. Sollte der Sicherheitsbereich unterbrochen werden, dann führt das Fluggerät 10, 10' eine Notlandung auf dem Werkstück 4 aus, sofern es sich nicht in einer ohnehin sicheren Position (z.B. in sicherer Höhe) befindet. Nach Freigabe des Sicherheitsbereiches kalibriert sich das Fluggerät 10, 10' neu und setzt den Flugauftrag fort. In diesem Fall sind die Werkzeugmaschinen 3, 6a, 6b mit dem Flugkontrollzentrum 11 verbunden und teilen diesem Unterbrechungen des Sicherheitsbereichs mit. Das Flugkontrollzentrum 11 teilt dies den Fluggeräten 10, 10' mit und kann sie so zwingen, die Notlandung auszuführen. Alternativ stehen das Fluggerät und diejenige Werkzeugmaschine, in dessen Sicherheitsbereich sich das Fluggerät befindet, in direktem Kontakt, spätestens sobald das Fluggerät in den Sicherheitsbereich eintritt. Außerhalb des Sicherheitsbereiches fliegen die Fluggeräten 10, 10' beispielsweise in sicherer Höhe.

Für das mm- bzw. cm-genaue Anfliegen der Werkstücke 4 sind die Fluggeräte 10, 10' mit einer Positionssteuerung und ggf. mit einer Kamera ausgestattet. Heutige räumliche Positionierungslösungen sind in der Lage, in diesen Genauigkeitsbereich zu kommen. Mittels der Kamera kann zudem der Startpunkt (Koordinatennullpunkt) des Werkstückes (z.B. Blech) 4 exakt zum Fluggerät 10, 10' erfasst werden. Durch die Erfassung mehrerer Ecken (im Idealfall aller 4 Ecken eines Blechs) mit der Kamera vorab und Rekalibrierung der Positionserfassungskoordinaten auf diese Eckdaten des Bleches kann die Genauigkeit zusätzlich erhöht werden. Alternativ zu dieser Positionssteuerung sind auch bekannte optische Positionserfassungseinheiten (z.B. Lasertracker o.ä.) einsetzbar.

Statt der oben beschriebenen Ausführungsform, bei der die Fluggeräte 10, 10' das Werkstück 4 eigenständig anfliegen, sind auch folgende Alternativen möglich:
1. Das Flugkontrollzentrum 11, verbunden mit der Produktionsablaufsteuerung 8, steuert/regelt sämtliche Bewegungen aller Fluggeräte 10, 10', auch beim Anfliegen einer Werkzeugmaschinen 3, 6a, 6b, sobald die Werkzeugmaschine an das Flugkontrollzentrum 11 die Rückmeldung gibt, dass sie jetzt angeflogen werden kann (bspw. weil ein Bearbeitungskopf steht und gerade keine Kollisionsgefahr besteht);
2. Das Flugkontrollzentrum 11, verbunden mit der Produktionsablaufsteuerung 8, steuert/regelt sämtliche Bewegungen aller Fluggeräte 10, 10', aber nur, bis ein Fluggerät 10, 10' an einer Werkzeugmaschinen 3, 6a, 6b ankommt. Dann übernimmt eine maschineneigene (lokale) Flugkontrolle oder die gleiche Flugkontrolle, nunmehr verbunden mit der Werkzeugmaschine, die Steuerung/Regelung des Fluggeräts 10, 10', so dass das Fluggerät 10, 10' auch bei sich bewegender Werkzeugmaschine sicher Werkstücke 4 auf der Werkzeugmaschine anfliegen kann, da Werkzeugmaschine und Fluggerät von der gleichen Flugkontrolle an der Werkzeugmaschine gesteuert/geregelt werden.

Wie in **Fign. 2a, 2b** gezeigt, weisen die Fluggeräte 10, 10' eine Werkstück-Applikationseinheit **13**, **14** auf, um Applikationsdaten, welche Logistikdaten für ein bearbeitetes oder noch zu bearbeitendes Werkstück 4 beinhalten, an das Werkstück 4 zu applizieren. Die Applikationseinheit des in Fig. 2a gezeigten Fluggeräts 10 ist als eine Markierungseinheit 13 zum Markieren von Daten (Markierungen) **15** auf ein Werkstück 4, insbesondere eine (Tintenstrahl)-Druckereinheit zum Drucken oder eine Lasermarkierungseinheit zum Lasermarkieren der Daten (Markierungen) 15 auf das Werkstück 4, und die Applikationseinheit des in Fig. 2b gezeigten Fluggeräts 10' als eine Halteeinheit 14 zum Halten eines Werkstücks 4 ausgeführt.

Das Fluggerät 10 mit seiner Markierungseinheit 13 dient dazu, Daten 15, insbesondere Logistikdaten, wie z.B. Werkstücknummern, Losnummern, Kundendaten etc., temporär oder permanent auf ein zu transportierendes Werkstück 4 zu markieren. Dazu wird das Werkstück 4 von dem Fluggerät 10 angeflogen, und die Daten 15 werden von der Markierungseinheit 13 auf das Werkstück 4 markiert. Während des Markierungsvorgangs schwebt das Fluggerät 10 ortsfest über oder vor dem Werkstück 4 oder ist zuvor auf dem Werkstück 4 oder der Werkzeugmaschine 3, 6a, 6b gelandet. Um Positionsdrifts zu verhindern, kann nach mehreren Markierungsvorgängen eine Rekalibrierung anhand einer Werkstückkante durchgeführt werden. Idealerweise findet der Markierungsvorgang vor dem ersten Bearbeitungsschnitt direkt auf das Rohblech statt, das sicher eben im Bereich weniger cm-Unebenheiten auf der Arbeitsfläche liegt. Die Werkzeugmaschine 3, 6a, 6b übermittelt das Rohblechformat und die zugehörigen relativen Positionen der zu markierenden Daten 15 an das Fluggerät 10 entweder direkt oder indirekt über das Flugkontrollzentrum 11. Für den Fall, dass das Fluggerät 10 auf dem Werkstück 4 gelandet ist, können auch höherwertige Daten 15, wie z.B. ein vollständiger DataMatrix-Code o.ä., markiert werden.

Die Fluggeräte 10, 10' verfügen über wiederaufladbare Energiequellen, die an einer Ladestation **16**, welche einen definierten Landeplatz für die Fluggeräte 10, 10' aufweist, aufgeladen werden können. Die wiederaufladbare Energiequellen können beispielsweise Akkumulatoren, deren Aufladung per Induktion erfolgt, oder auch Photovoltaikzellen sein, die mit einem Laser (z. B. Diodenlaser) aufgeladen werden. Die Ladestation 16 für das Fluggerät 10 kann optional mit einem Austrocknungsschutz für die InkJet-Düsen der Druckereinheit sowie mit einem Düsenwechselmagazin und einer Nachfülleinheit ausgerüstet sein.

Das Fluggerät 10' mit seiner Halteeinheit 14 dient dazu, ein bearbeitetes oder noch zu bearbeitendes Werkstück 4 entsprechend den Logistikdaten fort von der Werkzeugmaschine 3, 6a, 6b an den Versandbereich 7 oder an eine andere Werkzeugmaschine zu transportieren. Die Halteeinheit 14 kann beispielsweise als Vakuumsauger, Elektromagnet, Elektroadhäsionsgreifer oder mechanischer Greifer ausgeführt sein. Dieses fluggerät-basierte Transportsystem ist eingebettet in den industriellen Fertigungsprozess, der von der Produktionsablaufsteuerung 8 gesteuert wird, und kann innerhalb der Prozesskette Blech beispielsweise für die Vereinzelung und den Transport von Blechteilen zwischen Bearbeitungsstationen (Werkzeugmaschinen) und/oder Lagerplätzen (Materiallager, Paletten) eingesetzt werden.

Das Flugkontrollzentrum 11 verwaltet Transportaufträge für den Flugtransport von Werkstücken 4 von Ausgangs- zu Zielstationen. Die Transportaufträge können beispielsweise von der Produktionsablaufsteuerung 8 oder einer Werkzeugmaschine 3, 6a, 6b stammen. Die Transportaufträge enthalten unter anderem Informationen über die zu transportierenden Werkstücke 4 (Geometrie, Gewicht usw.) sowie die Ausgangs- und Zielposition. Außerdem können Transportaufträge eine unterschiedliche Priorität aufweisen: Dringende Aufträge werden mit einer höheren Priorität abgearbeitet (z.B. weil Werkstücke dringend an den Kunden verschickt werden müssen), und eine Werkzeugmaschine kann die Priorität neuer und auch bestehender Entladeaufträge erhöhen, weil der Platz für neue Werkstücke benötigt wird. In diesem Fall würden mehr Fluggeräte 10' für die Entladung dieser Maschine eingeteilt; die zur Verfügung stehende Kapazität kann damit sehr flexibel eingesetzt werden, was gegenüber aktuell verfügbaren Transportsystemen eine wesentliche Verbesserung darstellt.

Das Flugkontrollzentrum 11 verwaltet die Fluggeräte 10' des Transportsystems, überwacht unter anderem Position, Energiezustand und Auftragsstatus der einzelnen Fluggeräte 10' und weist den Fluggeräten 10' Transportaufträge unter Berücksichtigung der spezifischen Eigenschaften der Fluggeräte (Tragefähigkeit, Geschwindigkeit, Größe, Aufnahmevorrichtung usw.) zu. Die Priorität der anstehenden Aufträge wird durch einen Algorithmus unter Berücksichtigung der aktuellen Position der zur Verfügung stehenden Fluggeräte 10' zur optimalen Zuweisung von Transportaufträgen genutzt. Abhängig von den Werkstückeigenschaften werden ein oder mehrere Werkstücke 4 durch ein oder mehrere Fluggeräte 10' gemeinsam (Schwarm) transportiert. Ausgangs- und Zielposition sind Bestandteil eines Transportauftrags; hierdurch ist eine höchstmögliche Flexibilität bei der Sortierung von Werkstücken 4 gewährleistet. Dadurch können z.B. jederzeit neue Lagerstellen für bestimmte Werkstücke 4 definiert werden, die sich beliebig auf den für die Fluggeräte 10' zugänglichen Raum aufteilen können. Aktuell verfügbare Entladesysteme weisen dagegen fest definierte Entladestellen auf.

Nach Erreichen der Zielposition lädt das Fluggerät 10' die transportierten Werkstücke 4 ab. Bis zur Erteilung des nächsten Transportauftrags fliegt das Fluggerät 10' zu einer vom Flugkontrollzentrum 11 zugewiesenen Park- oder Ladestation. Treten bei einem Transportauftrag Probleme auf - z.B. weil das zu transportierende Werkstück nicht mehr an der Ausgangsposition verfügbar ist oder weil die Zielposition aktuell nicht mehr angeflogen werden kann - meldet das Fluggerät 10' dies dem Flugkontrollzentrum 11 und kann daraufhin einen geänderten Transportauftrag erhalten.

Im Folgenden wird in dem Produktionssystem 1 exemplarisch ein Beispielablauf für die Prozesskette Blech beschrieben.

Nach Abschluss der Bearbeitung wird die Palette mit den fertig bearbeiteten Werkstücken 4, die zu verschiedenen Kundenaufträgen gehören, aus der Laserbearbeitungsmaschine 3 ausgeschleust, die dies an die zentrale Produktionsablaufsteuerung 8 meldet. Die Produktionsablaufsteuerung 8 kennt die anschließenden Bearbeitungsschritte für die einzelnen Werkstücke 4 und generiert für die Werkstücke 4 Transportaufträge zu den jeweiligen nächsten Bearbeitungsstationen. Die lasergeschnittenen Werkstücke 4 werden in diesem Fall auf unterschiedliche Ziele verteilt:
- Die Werkstücke 4 des ersten Kundenauftrags sind fertig und sollen in einer Kiste im Versandbereich 7 abgelegt werden. Da diese Werkstücke 4 die Tragkraft übersteigen, werden für den Transport je zwei Fluggeräte 10' eingesetzt (A). Die Zuweisung und Koordination der Fluggeräte 10' übernimmt das Flugkontrollzentrum 11. Grundlage für die Berechnung sind die Werkstückdaten (Geometrie, Materialgewicht) aus der Produktionsablaufsteuerung 8.
- Die anderen Werkstücke 4 sollen von den Biegemaschinen 6a, 6b weiterverarbeitet werden. Hierfür legt ein Fluggerät 10' die Werkstücke 4 einzeln auf eine Palette in Reichweite der Biegemaschinen 6a, 6b (B).

Der Weitertransport zu den beiden unterschiedlichen Zielen kann parallel erfolgen, da genügend Fluggeräte 10' zur Verfügung stehen. Die gebogenen Werkstücke 4 werden im Biegezellenbereich 5 abgelegt und anschließend von Fluggeräten 10' ebenfalls in den Versandbereich 7 transportiert und dort verpackt (C).

Während die Werkstücke 4 zum Biegezellenbereich 5 transportiert werden, kann ein Bediener spontan ein geschnittenes Werkstück 4 manuell überprüfen. Dazu fordert er über die Produktionsablaufsteuerung 8 einen Transport mit hoher Priorität an. Das Flugkontrollzentrum 11 ändert den Flugauftrag desjenigen Fluggeräts 10', das das nächste Werkstück 4 zum Biegezellenbereich 5 transportieren soll, und weist diesem als Ziel einen Qualitätssicherungsprüfstand 17 zu. Das Fluggerät 10' transportiert das Werkstück 4 zum Prüfstand 17 (D). Nach Prüfung und Freigabe wird das Werkstück 4 ebenfalls zum Biegezellenbereich 5 transportiert.

## Patentansprüche

1. Produktionssystem (1) mit mindestens einer Werkzeugmaschine (3, 6a, 6b) zum Bearbeiten von Werkstücken (4),
**gekennzeichnet durch** mindestens ein die Werkzeugmaschine (3, 6a, 6b) anfliegendes Fluggerät (10, 10'), welches eine Werkstück-Applikationseinheit (13, 14) aufweist, wobei Applikationsdaten für den Einsatz der Applikationseinheit (13, 14) an einem Werkstück (4) Logistikdaten für das bearbeitete oder noch zu bearbeitende Werkstück (4) umfassen.

2. Produktionssystem nach Anspruch 1, **dadurch gekennzeichnet, dass** die Werkzeugmaschine (3, 6a, 6b) eine Werkstück-Beladungseinrichtung, insbesondere mit einem Werkstück-Regallager, und/oder eine Werkstück-Entladungseinrichtung umfasst.

3. Produktionssystem nach Anspruch 1 oder 2, **gekennzeichnet durch** ein Flugkontrollzentrum (11), von dem aus die Flugbewegungen des mindestens einen Fluggeräts (10, 10') kontrollierbar sind.

4. Produktionssystem nach Anspruch 3, **dadurch gekennzeichnet, dass** das Flugkontrollzentrum (11) in Kommunikationsverbindung mit der mindestens einen Werkzeugmaschine (3, 6a, 6b) steht, insbesondere um Kollisionen des Fluggeräts (10, 10') mit bewegbaren Maschinenteilen (12) der Werkzeugmaschine (3, 6a, 6b) zu verhindern oder um die an der Werkzeugmaschine (3, 6a, 6b) anzufliegende Zielposition an das Flugkontrollzentrum (11) zu übertragen.

5. Produktionssystem nach Anspruch 3 oder 4, **dadurch gekennzeichnet, dass** das Flugkontrollzentrum (11) in Kommunikationsverbindung mit einer Produktionsablaufsteuerung (8) steht, die den Produktionsablauf der Werkstücke (4) an der mindestens einen Werkzeugmaschine (3, 6a, 6b) steuert. duktionsablaufsteuerung (8) steht, die den Produktionsablauf der Werkstücke (4) an der mindestens einen Werkzeugmaschine (3, 6a, 6b) steuert.

6. Produktionssystem nach einem der vorhergehenden Ansprüche, **dadurch gekennzeichnet, dass** die Applikationseinheit als eine Markierungseinheit (13) zum Markieren der Logistikdaten auf das Werkstück (4), insbesondere als eine Druckereinheit zum Drucken der Logistikdaten auf das Werkstück (4) oder eine Lasermarkierungseinheit zum Lasermarkieren der Logistikdaten auf das Werkstück (4), ausgebildet ist.

7. Produktionssystem nach Anspruch 6, **gekennzeichnet durch** mindestens eine Weiterverarbeitungsstation (7), insbesondere eine zweite Werkzeugmaschine (3, 6a, 6b) oder eine Station zum automatisierten oder manuellen Weiterbearbeiten von bearbeiteten Werkstücken (4), wobei die aufgedruckten Logistikdaten Daten für einen Weitertransport von bearbeiteten Werkstücken (4) an die mindestens eine Weiterverarbeitungsstation (7) umfassen.

8. Produktionssystem nach einem der vorgehenden Ansprüche, **dadurch gekennzeichnet, dass** die Applikationseinheit als eine Halteeinheit (14) zum Halten von bearbeiteten Werkstücken (4) ausgebildet ist.

9. Produktionssystem nach Anspruch 8, **gekennzeichnet durch** mindestens eine Weiterverarbeitungsstation (7), insbesondere eine zweite Werkzeugmaschine (3, 6a, 6b) oder eine Station zum automatisierten oder manuellen Weiterbearbeiten von bearbeiteten Werkstücken (4), wobei die Logistikdaten Daten für einen Flugtransport von bearbeiteten Werkstücken (4) von der Werkzeugmaschine (3, 6a, 6b) an die mindestens eine Weiterverarbeitungsstation (7) mittels des mindestens einen Fluggeräts (10') umfassen.

10. Verfahren zum Applizieren von Applikationsdaten, insbesondere Logistikdaten, an ein zu transportierendes Werkstück (4), **dadurch gekennzeichnet, dass** das zu transportierende Werkstück (4) von mindestens einem Fluggerät (10, 10') angeflogen wird, welches Applikationsdaten für das Werkstück gedruckt oder lasermarkiert werden, oder das Werkstück (4) von dem mindestens einen Fluggerät (10, 10') entsprechend den Applikationsdaten transportiert wird.

11. Verfahren nach Anspruch 10, **dadurch gekennzeichnet, dass** die Flugbewegungen des mindestens einen Fluggeräts (10, 10') einerseits und die Bewegungen von anderen Fluggeräten (10, 10') oder von bewegbaren Maschinenteilen (12) einer das Werkstück (4) bearbeitenden Werkzeugmaschine (3, 6a, 6b) andererseits derart aufeinander abgestimmt werden, dass das mindestens eine Fluggerät (10, 10') nicht mit den anderen Fluggeräten (10, 10') oder mit den bewegbaren Maschinenteilen (12) kollidiert.

12. Verfahren nach Anspruch 10 oder 11, **dadurch gekennzeichnet, dass** die an einer das Werkstück (4) bearbeitenden Werkzeugmaschine (3, 6a, 6b) anzufliegende Zielposition von der Werkzeugmaschine (3, 6a, 6b) oder einer Produktionsablaufsteuerung (8) an das mindestens eine Fluggerät (10, 10') oder an ein Flugkontrollzentrum (11), von dem aus die Flugbewegungen des mindestens einen Fluggeräts (10, 10') kontrolliert werden, übertragen werden.

13. Verfahren nach einem der Ansprüche 10 bis 12, **dadurch gekennzeichnet, dass** das Fluggerät (10) während des Markierens der Applikationsdaten auf der Werkzeugmaschine (3, 6as, 6b) oder dem Werkstück (4) aufsitzt oder beabstandet zum Werkstück (4) schwebt.

14. Verfahren nach einem der Ansprüche 10 bis 13, **dadurch gekennzeichnet, dass** das Werkstück (4) von einer das Werkstück (4) bearbeitenden Werkzeugmaschine (3, 6a, 6b) an mindestens eine Weiterverarbeitungsstation (7), insbesondere eine zweite Werkzeugmaschine (3, 6a, 6b) oder eine Station zum automatisierten oder manuellen Weiterbearbeiten von bearbeiteten Werkstücken (4), mittels des mindestens eines Fluggeräts (10') transportiert wird.
